Europäisches Patentamt

European Patent Office

Office européen des brevets

(11) Publication number: **0 413 943 A1**

# EUROPEAN PATENT APPLICATION

(21) Application number: **90113363.7**

(22) Date of filing: **12.07.90**

(51) Int. Cl.⁵: **G01N 21/55, G01N 21/84, G01B 11/06**

(30) Priority: **14.08.89 US 393198**

(43) Date of publication of application:
**27.02.91 Bulletin 91/09**

(84) Designated Contracting States:
**DE FR GB IT SE**

(71) Applicant: **Hughes Aircraft Company**
**7200 Hughes Terrace P.O. Box 45066**
**Los Angeles, California 90045-0066(US)**

(72) Inventor: **Shih, I-Fu**
**3351 St. Albans Drive**

**Los Alamitos, California 90720(US)**
Inventor: **Chang, David B.**
**14212 Livingston St.**
**Tustin, California 92680(US)**
Inventor: **Vali, Victor**
**26035 Moulton Parkway**
**Laguna Hills, California 92653(US)**

(74) Representative: **Patentanwälte Grünecker,**
**Kinkeldey, Stockmair & Partner**
**Maximilianstrasse 58**
**D-8000 München 22(DE)**

(54) **Non-contact on-line determination of phosphate layer thickness and composition of a phosphate coated surface.**

(57) A nondestructive method and apparatus is disclosed for determining the thickness and composition of a zinc phosphate layer applied to a metal surface, such as sheet metal on an automotive assembly line. The phosphate layer is irradiated with infrared light which is at least partially transmitted through the phosphate layer. Reflections from the upper and lower surfaces of the phosphate layer return a total reflected intensity which is a function of the optical parameters of the phosphate components and the ratio of the components corresponding to the optical parameters. In the event, for example, that a phosphate layer includes two zinc phosphate components, the measure of reflected intensity at two separate wavelengths will be different inasmuch as the optical properties of the zinc phosphate components is also a function of frequency. The measured reflected intensity and its functional dependence upon the ratio of the components within the phosphate layer can be taken together with the known values of the optical parameters of each component to compute the fraction of each component within the phosphate layer.

FIG. 1

EP 0 413 943 A1

# NONCONTACT, ON-LINE DETERMINATION OF PHOSPHATE LAYER THICKNESS AND COMPOSITION OF A PHOSPHATE COATED SURFACE

## Background of the Invention

### 1. Field of the Invention

The invention relates to the field of nondestructive analysis of phosphate coated surfaces and in particular to the nondestructive determination of the thickness and composition of the phosphate layer of an automotive surface.

### 2. Description of the Prior Art

In recent years the cathodic electro-coating of paint primers onto phosphated steel has become increasingly important. This is particularly true in the automotive industry where the process is used as a precursor to undercoating and topcoating with acrylic base paints. In many instances the performance of the total corrosion resistance thus produced has been remarkably good, though particular care is required in selecting the correct phosphate system and application process. A particular example of such a phosphate coating for use in automotive paints is described in Richardson et al., "The Influence of Zinc Phosphate Crystalline Morphology on the Corrosion Resistance of Electro-Painted Steel", Transactions of the Institute of Metal Finishing, Volume 61, page 155 (1983).

Prior art methods for providing quality control of a phosphated steel surface comprised the steps of removing small chips of the phosphate coated surface from tlie automobile on the production line, transporting the chips to a laboratory, sometimes distantly separated from the assembly line, and then separating the phosphate layer from the substrate. The examination of the depth and composition of the layer then made under a microscope with results reported back to the production line.

Clearly, with such prior art methods, even when the laboratory is located on site and at the immediate disposal of the quality control personnel on the manufacturing line, a substantial delay exists between the time when the sample is taken from the coated surface and when the results are reported. The cost and delay not only makes quality checking of each coated surface of an automobile impractical, but it tends to cause practical quality control by sampling techniques to be at best an after-the-fact determination. Depending upon the circumstances of manufacture, a corrective response cannot be made, (if one is indicated) on items being installed within assembled products, but only a correction to subsequently finished components. In the meantime, process variables may have changed and subsequent finished components may or may not continue to have the same defect or be defective to the same extent as the previously sampled product.

Therefore, what is needed is an on-line real-time nondestructive means for determining the thickness and composition of the phosphate layer on a steel surface.

## Brief Summary of the Invention

The phosphate material may be a blend of two components. Together they form a single layer of phosphate. The purpose of the invention is to provide an on-line non-contact method of measuring the thickness of the layer and determining the composition of the layer, i.e. ratio of one phosphate component to the other in the layer.

The invention is a method for nondestructively determining the thickness of the layer and the ratio of components included within a protective phosphate film disposed on a substrate comprising the steps of illuminating the protective phosphate film on the substrate with light of a first predetermined frequency. The intensity of reflected light from the protective phosphate film is measured at the first frequency. The protective phosphate film on the substrate is illuminated with light of a second predetermined frequency. The reflected light intensity from the protective phosphate film is measured at the second frequency. The relative ratio of the first and second components and the thickness of the protective phosphate film are determined from the measured intensities of reflected light from the protective phosphate film at the first and second frequencies. The light at the first and second frequencies is reflected by the protective phosphate film by means of the first and second surfaces of the protective phosphate film. The protective phosphate film is at least translucent to the light at the first and second frequencies.

As a result, the thickness and the relative ratio of the components within the protective phosphate film are nondestructively determined.

In the preferred embodiment the first and second frequencies are unequal and are selected from the infrared spectrum. The measured reflected light is light reflected from at least two interfaces of the protective phosphate film. The step of determining comprises the step of automatically computing the composition ratio of the components within the protective phosphate film given the optical parameters at each predetermined frequency by utilizing the functional dependence of the reflected intensity upon the known optical parameters and the thickness.

In particular the phosphate film has two components with effective fractional portions $\xi_1$ and $\xi_2$ with $\xi_1 + \xi_2 = 1$. The step of computing comprises the step of determining d, $\xi_1$ and $\xi_2$ corresponding respectively to the thickness of the film and the fraction of each of the components of the protective phosphate film respectively based upon measured reflective intensities at each frequency by the following equation:

$$I = a_0^2 \left[ r_1^2 + (1-r_1)^4 r_2^2 e^{-4(\xi_1 \alpha_1 + \xi_2 \alpha_2)d \sec \phi'} \right.$$

$$\left. + 2(1 - r_1)^2 r_1 r_2 e^{-2(\xi_1 \alpha_1 + \xi_2 \alpha_2)d \sec \phi'} \cos 2(\xi_1 k_1 + \xi_2 k_2)d \cos\phi' \right]$$

The invention can be alternatively characterized as a method for nondestructively determining the actual thickness of a phosphate layer disposed upon a metal substrate for use in real-time nondestructive quality testing in an automotive assembly line comprising the steps of illuminating the phosphate layer with a light beam of a first frequency within the infrared spectrum. The first frequency is transmitted at least in part into the phosphate layer. The intensity of light reflected from the phosphate layer is measured at the first frequency. The phosphate layer is illuminated with a light beam of a second frequency within the infrared spectrum. The second frequency is transmitted at least in part into the phosphate layer. The intensity of light reflected from the phosphate layer is measured at the second frequency. The effective fractions, $\xi_1$ and $\xi_2$ of the first and second phosphate components within the phosphate layer are automatically derived from the measured reflected intensities of light from the phosphate layer. The degree of reflected light from the phosphate layer is determined at least in part by the fraction of each phosphate component.

As a result, on-line, real-time quality control of painted metal surfaces in an automotive assembly line is performed.

In the illustrated embodiment the measured reflected light intensity is caused to be reflected by the front and the back surfaces of the phosphate layer.

The method further comprises illuminating the phosphate layer at additional frequencies. The number of the additional frequencies equals the number of additional phosphate components contained within the phosphate layer. The intensity of reflected light from the phosphate layer is measured at the additional frequencies. The fraction of each phosphate component within the phosphate layer is automatically derived based upon the measured intensities of reflected light at each of the frequencies including the additional frequencies.

The invention is still further characterized as an improvement in an apparatus for determining quality of a phosphate layer on sheet metal on a real-time basis in an automotive production line comprising a coherent light source for illuminating the phosphate layer with light at a plurality of frequencies. The phosphate layer is at least partially translucent to the light at each of the frequencies. A light detector measures the intensity of reflected light from the phosphate layer at each of the frequencies. A computer automatically derives the fraction of each of the components contained within the phosphate layer causing the light to be reflected from the phosphate layer.

As a result, real-time nondestructive quality control of the phosphate layer is performed.

The coherent light source for illuminating the phosphate layer and light detector for measuring the intensity of the light reflected from the phosphate layer provides and measures as many frequencies respectively as there are components within the phosphate layer.

3

Brief Description of the Drawings

Figure 1 is a highly diagrammatic depiction of the measurement apparatus shown optically measuring the thickness of a phosphate film, shown in cross section in greatly exaggerated scale.

Figure 2 is a graph of a typical infrared transmission spectrum for a phosphate compound used in phosphate coating of a metal surface.

Detailed Description of the Preferred Embodiment

A nondestructive method and apparatus is disclosed for determining the fraction of each zinc phosphate component within a phosphate layer applied to a metal surface, such as phosphate sheet metal within an automotive assembly line. The phosphated layer is irradiated with infrared light which is at least partially transmitted through the phosphate layer. Reflections from the upper and lower surfaces of the phosphate layer return a total reflected intensity which is a function of the optical parameters of the phosphate layers and the fraction of the components corresponding to the optical parameters. In the event, for example, that a phosphate layer includes two zinc phosphate components, the measure of reflected intensity at two separate wavelengths will be different inasmuch as the optical properties of the zinc phosphate components is also a function of wavelength. The measured reflected intensity and its functional dependence upon the relative ratio of the components within the phosphate layer can be taken together with the known values of the optical parameters of each component to compute the fraction of each component within the phosphate layer.

The present invention provides a methodology and means to determine the actual thickness and composition of a phosphate layer on a steel or metal substrate. Interferometric data at two selected wavelengths is recorded. The data is input into a theoretical model and the fraction of each component of the phosphate layer is determined. A weighted ratio of various phosphate components within the phosphate layer is also determined.

In the illustrated embodiment, the phosphate components include zinc phosphate, $Zn_3(H_3PO_4)_2$, and zinc ferrous phosphate, $Zn_2Fe(H_3PO_4)_2$. These components may have a blurred interface between them, or may comprise a nonuniform or even a homogeneous mixture of the two components.

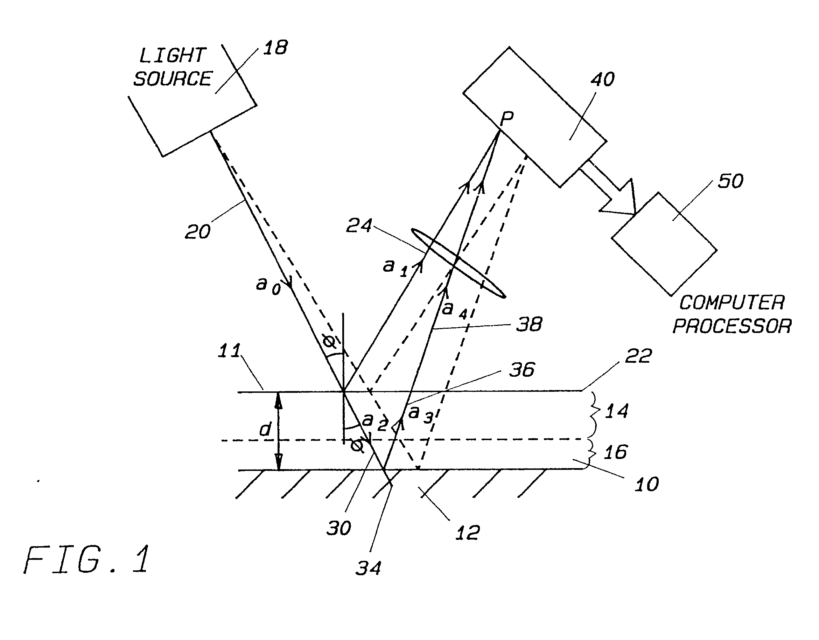

Turn now to Figure 1 wherein the illustrated embodiment is conceptually described. A phosphate layer 10 is disposed on a steel substrate 12, typically a sheet metal component of an automobile or other vehicle. Phosphate layer 10 is idealized in Figure 1 as being comprised of a first phosphate component or layer 14 and a second underlying phosphate component 16 in contact with steel substrate 12. A coherent light source 18, such as a laser operating at 10.6 micrometers, illuminates surface 11 with a beam 20 of amplitude a0 perpendicular to the surface of substrate 12.

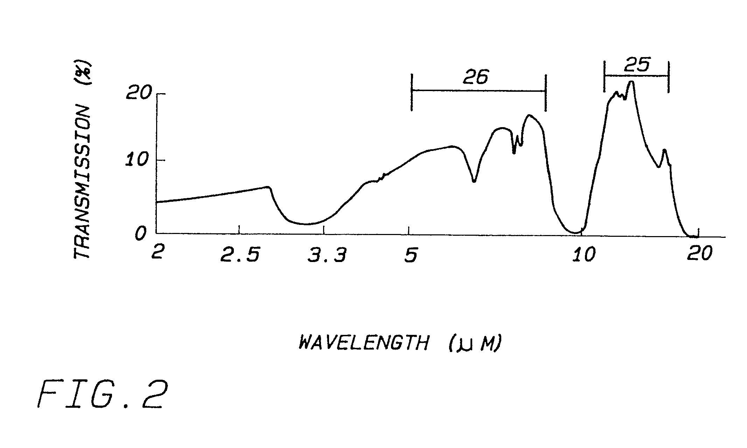

However, the wavelength of the incident beam 20 is chosen at a portion of the spectrum wherein phosphate layer 10 is at least semitransparent or translucent. While phosphate layers 10 may be opaque in the visible spectrum, in the infrared spectrum such as shown in Figure 2, a wavelength, range of wavelengths or multiple range of wavelengths will exist wherein the phosphate layer will be semitransparent.

For example, turning to Figure 2, the transmission spectrum of a typical phosphate layer is graphically illustrated. The vertical axis represents the percentage transmission of the incident beam across an interface, while the horizontal axis represents the wavelength in microns. Inspection of the transmission spectrum of Figure 2 readily indicates that there are two wavelength ranges in which good transmissivity is obtained through the interface, namely the wavelength ranges referenced by numerals 26 and 28. The peak in range 28 is in fact in excess of 20% and could be chosen as one frequency for coherent light source 18. A nearby distinguishable frequency on the same peak could be chosen as the second frequency, or one of the peaks within range 26 could alternately be chosen to designate a second wavelength of coherent light source 18 usable according to the invention as described below.

It must be clearly understood that the transmission spectrum shown in Figure 2 is illustrated by way of example only. The transmission spectra of any particular phosphate can be empirically measured and two appropriate frequencies for transmission therethrough determined according to the teachings of the invention

Turning now to Figure 1, incident beam 20, with amplitude a0 is partially reflected in ray 24 with amplitude a1 and partially transmitted as ray 30 with amplitude a2. Ray 30 travels through the combined thickness of phosphate layers 14 and 16 and is incident on the phosphate-to-metal interface 31 A portion of ray 30 will again be transmitted into metal substrate 12 as ray 34 with a greater portion being reflected back upwardly through phosphate layer 10 as ray 36 with an amplitude a3. Ray 36 is incident on the underside of interface 22 and a portion again will be transmitted therethrough as ray 38 with an amplitude a4. Rays 24 and 38 for each incident ray 20 will constructively or destructively combine to form an interfering fringe pattern which can be focused on a photographic plate, light detector or video camera 40. As will be shown below, the intensity of the reflected light is measured and the thickness of phosphate layer 10 determined, for example by a computer 50 programmed to solve the various equations given below.

Treating the amplitudes of the waves as complex numbers bearing phase information, the incident amplitude received by detector 40 is the sum of rays 24 and 38, namely

$$a = a_1 + a_4 \qquad (1)$$

where

a = amplitude at detector 40

$a_1$ = amplitude reflected from interface 22

$a_4$ = amplitude transmitted through interface 22 after reflected from interface 32.

The values for amplitudes $a_1$ and $a_4$ can be rewritten in terms of: 1) the incident amplitude $a_0$; 2) the reflectivity of interface 22 and 32, designated as $r_1$ and $r_2$ respectively; 3) the absorptivity, $\alpha$, of phosphate layer 10; 4) k, the wave number of the radiation while inside phosphate layer 10; and 5) the thickness, d, of phosphate layer 10. The detected amplitude, a, is therefore set forth as shown below in Equation 2.

$$a = a_0 [r_1 + (1-r_1)^2 r_2 e^{-2\alpha d \sec\phi} e^{2ikd \cos\phi}] \qquad (2)$$

where $r1$ = reflectivity of interface 22

$r2$ = reflectivity of interface 32

$\alpha$ = absorptivity of layer 10

k = wave number in layer 10

$\phi$ is the angle the incident beam makes with respect to the normal to the surface.

The intensity of the observed beam at detector 40 is the absolute magnitude squared of the detected amplitude given in Equation 2 above. Therefore, the intensity of the detected beam reflected from phosphate layer 10 on metal substrate 12 is given below in Equation 3.

$$I = |a|^2 = a_0^2 [r_1^2 + (1-r_1)^4 r_2^2 e^{-4\alpha d \sec\phi'} + 2(1-r_1)^2 r_1 r_2 e^{-2\alpha d \sec\phi'} \cos(2kd \cos\phi')]$$

$$(3)$$

where

$\phi'$ is the refracted beam angle inside the phosphate layer, which is related to $\phi$ by $n \sin \phi' = \sin\phi$, where n is the index of refraction.

The intensity is thus a function of the optical parameters of phosphate layer 10 and the thickness d of the layer. The intensity varies periodically as a function of $\phi$ or $\phi'$ because of the term, $\cos(2kd\cos\phi')$. The intensity is thus a maximum when $2kd \cos \phi' = 0, 2\pi, 4\pi, ...$ and is a minimum at $2kd \cos\phi' = \pi, 3\pi, 5\pi ,...$. By measuring the periodicity of the fringes in the image plane and noting that $\Delta x = f\Delta\phi$ where f is the focal length of the lens, d can be determined.

However, in reality phosphate layer 10 is in fact a composite layer of either two separate components, two separate component layers which are merged with partial overlap, or a nonuniform or homogeneous mixture of two layers with each other with no clear interface between the internal layers within layer 10. Each phosphate component within layer 10 will contribute to the optical properties of layer 10. Thus, the absorptivity and wave number of the radiation within layer 10 as expressed in the above equations may be regarded as an average from both phosphate components within layer 10 weighted by the extent of each phosphate component within the layer. Therefore, the weighted averages of the quantities, $<\alpha>$, $<d>$ and $<kd>$ which appears in Equation 3 can be considered as given by the following Equation 4.

$$<\alpha> = \xi_1 \alpha_1 + \xi_2 \alpha_2$$
$$<k> = \xi_1 k_1 + \xi_2 k_2 \qquad (4)$$

where

$\alpha_1$ is absorptivity of the first phosphate

$\xi_1$ is the fraction of the first phosphate component

$\alpha_2$ is the absorptivity of the second phosphate

$\xi_2$ is the fraction of the second phosphate component with $\xi_1 + \xi_2 = 1$.

5

Substituting the values for $<\alpha>$ and $<k>$ from Equation 4 into Equation 3 we obtain the following result

$$I = a_0^2 [r_1^2 + (1-r_1)^4 r_2^2 e^{-4(\xi_1 \alpha_1 + \xi_2 \alpha_2)d \sec\varphi'}$$
$$+ 2(1 - r_1)^2 r_1 r_2 e^{-2(\xi_1 \alpha_1 + \xi_2 \alpha_2)d \sec\varphi'} \cos 2(\xi_1 k_1 + \xi_2 k_2)d \cos\varphi']$$

Therefore the intensity of the measured beam is a function of known constants and the fractions, $\xi_1$ and $\xi_2$, of the two phosphate components within phosphate layer 10. By measuring the intensity at two separate wavelengths, the optical constants being separately known at each wavelength, we can then obtain two equations of the form set forth above with two unknowns. Although not linear equations, by noting that $\xi_1 = 1 - \xi_2$, measuring the fringe period for d at two different wavelengths, the two equations can be numerically solved, *e.g.* by a computer 50, to provide values for $\xi_1$ and $\xi_2$. Thus, an on-line and real time determination of the thickness and composition of the phosphate film is made.

If more than two phosphate components are present, then the procedure may be repeated with as many additional wavelengths as there are phosphate components for which effective aggregate thicknesses are to be obtained. Being able to determine each of these fractions then allows a practitioner to have a quantitative understanding of how the phosphate components are distributed within the layer and whether the beneficial corrosion resistance effects achievable in theory from such phosphate layers are likely to be realized.

The illustrated embodiment has been set forth solely as an example and should not be taken as limiting the invention which is defined by the following claims. It is to be understood that many alterations and modifications may be made by those of ordinary skill in the art without departing from the spirit and scope of the invention.

## Claims

1. A method for nondestructively determining the thickness and the composition ratio of a protective phosphate film disposed on a substrate comprising the steps of:
illuminating said protective phosphate film on said substrate with light of a first predetermined frequency;
measuring the intensity of reflected light from said protective phosphate film at said first frequency;
illuminating said protective phosphate film on said substrate with light of a second predetermined frequency;
measuring reflected light intensity from said protective phosphate film at said second frequency; and
determining the fraction of a first and second component of said protective phosphate film from said measured intensities of reflected light from said protective phosphate film at said first and second frequencies, said light at said first and second frequencies being reflected by said protective phosphate film by means of first and second interfaces of said protective phosphate film, said protective phosphate film being at least translucent to said light at said first and second frequencies,
whereby the fraction of each of said components within said protective phosphate film is nondestructively determined.

2. The method of Claim 1 wherein said first and second frequencies are unequal.

3. The method of Claim 2 wherein said first and second frequencies are selected from the infrared spectrum.

4. The method of Claim 1 wherein said step of determining comprises the step of automatically computing said fraction of each said component within said protective phosphate film given the optical parameters at each said predetermined frequency as known by utilizing a functional dependence of said reflected intensity upon said known optical parameters and said thickness.

5. The method of Claim 4 wherein said phosphate film has at least two components of fraction $\xi_1$ and $\xi_2$ respectively, where said step of computing comprises the step of determining $\xi_1$ and $\xi_2$, corresponding respectively to said fraction of said components of said protective phosphate film based upon measured reflective intensities at each said frequency, by the following equation:

$$I = a_0^2 \left[ r_1^2 + (1-r_1)^4 r_2^2 e^{-4(\xi_1 \alpha_1 + \xi_2 \alpha_2)d \sec\varphi'} \right.$$

$$\left. + 2(1-r_1)^2 r_1 r_2 e^{-2(\xi_1 \alpha_1 + \xi_2 \alpha_2)d \sec\varphi'} \cos 2(\xi_1 k_1 + \xi_2 k_2)d \cos\varphi' \right]$$

where for each said predetermined frequency:

I is the intensity of said measured reflected light at said predetermined frequency,

$a_0$ is the amplitude of light illuminating said substrate,

$r_1$ is the reflectivity of a first top interface of said phosphate film,

$r_2$ is the reflectivity of a second bottom interface of said phosphate film,

$\alpha_1$ the absorptivity of said first component of said phosphate film,

$\alpha_2$ the absorptivity of said second component of said phosphate film,

$\xi_1$ the fraction of said first component of said phosphate film,

$\xi_2$ the fraction of said second component of said phosphate film, and

$\varphi'$ the angle of refraction of the incident beam in said phosphate film.

6. The method of Claim 1 wherein each said step is automatically performed.

7. The method of Claim 5 wherein each said step is automatically performed.

8. A method for nondestructively determining the fraction of each phosphate component within a phosphate layer disposed upon a metal substrate for use in real-time nondestructive quality testing in an automotive assembly line comprising the steps of:

illuminating said phosphate layer with a light beam of a first frequency within the infrared spectrum, said first frequency being transmitted at least in part into said phosphate layer;

measuring the intensity of reflected light at said first frequency from said phosphate layer;

illuminating said phosphate layer with a light beam of a second frequency within the infrared spectrum, said second frequency being transmitted at least in part into said phosphate layer;

measuring the intensity of reflected light at said second frequency from said phosphate layer; and

automatically deriving the fraction of said first and second phosphate components within said phosphate layer from said measured reflected intensities of light from said phosphate layer, the degree of reflected light from said phosphate layer being determined at least in part by said fraction of each phosphate component,

whereby on-line real-time quality control of phosphated metal surfaces in an automotive assembly line is performed.

9. The method of Claim 8 where in said step of measuring said intensity of reflected light at said first and second frequencies, light is reflected from the two interfaces defined by said phosphate layer is measured.

10. The method of Claim 8 where said measured reflected light intensity is caused to be reflected by a $Zn_3(H_3PO_4)_2$ component.

11. The method of Claim 8 where said measured reflected light intensity is reflected from a $Zn_2Fe(H_3PO_4)_2$ component within said phosphate layer.

12. The method of Claim 10 where said measured reflected light intensity is reflected from a $Zn_2Fe(H_3PO_4)_2$ component within said phosphate layer.

13. The method of Claim 8 further comprising illuminating the phosphate layer at at least one additional frequency, the number of said additional frequencies equaling the number of additional phosphate layers contained within said phosphate layer, and measuring the intensity of reflected light from said phosphate layer at said additional frequencies, and automatically deriving the fraction of each phosphate component within said phosphate layer based upon said measured intensities of reflected light at each said frequencies including said additional frequencies.

14. For use in an automotive production line, an apparatus for determining quality of a phosphate layer on sheet metal on a real-time basis comprising:

means for illuminating said phosphate layer with light at a plurality of frequencies, said phosphate layer being at least partially translucent to said light at each of said frequencies;

means for automatically deriving the fraction of each component contained within said phosphate layer causing said light to be reflected from said phosphate layer,

whereby real-time nondestructive quality control of said phosphate layer is performed.

15. The improvement of Claim 14 wherein said means for providing said light provides light at each of said frequencies within the infrared spectrum.

16. The improvement of Claim 14 wherein said means for measuring light intensity reflected from said phosphate layer measures the light intensity reflected from the two interfaces of said phosphate layer.

17. The improvement of Claim 14 wherein said means for illuminating said phosphate layer and means for measuring the reflective intensity of the light reflected from said phosphate layer provides and measures as many frequencies respectively as there are components within said phosphate layer.

18. The method of Claim 17 wherein said components within said phosphate layer are zinc phosphate components within said phosphate layer.

50

COMPUTER PROCESSOR

40

18

LIGHT SOURCE

20

$a_0$

$\phi'$

$\phi$

P

24

$a_1$

38

36

22

14

16

10

12

34

30

$a_2$

$a_3$

$a_4$

11

$d$

FIG. 1

9

FIG.2

EP 0 413 943 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4129781 (W.M.DOYLE)<br>* column 1, line 1 - column 2, line 10 *<br><br>* column 3, lines 27 - 37 *<br>* column 4, lines 17 - 46 *<br>* figures 3, 4 * | 1-4, 6,<br>8, 9,<br>14-16 | G01N21/55<br>G01N21/84<br>G01B11/06 |
| Y | | 5, 10-12 | |
| | --- | | |
| Y | PROCEEDINGS OF THE 1987 IEEE INT. CONFERENCE ON ROBOTICS AND AUTOMATION  August 1987,<br>pages 515 - 519; S.PARTHASARATHY ET AL.:<br>"A color vision system for film thickness determination"<br>* pages 516 - 517; paragraph 5 * | 5 | |
| | --- | | |
| D,Y | TRANSACTIONS OF THE INSTITUTE OF METAL FINISHING vol. 61, 1983,<br>pages 155 - 160; M.O.W. RICHARDSON ET AL.:<br>"The influence of zinc phosphate crystalline morphology on the corrosion resistance of electropainted steel"<br>* page 155: Introduction * | 10-12 | |
| A | | 18 | **TECHNICAL FIELDS SEARCHED (Int. Cl.5 )** |
| | --- | | G01N |
| A | US-A-4189335 (J.C.EVANS)<br>* abstract *<br>* column 2, lines 3 - 26 *<br>* column 2, line 43 - column 4, line 44 * | 13, 17 | G01B |
| | --- | | |
| X | FR-A-2589578 (UNIV. DE REIMS)<br>* page 1, lines 1 - 23 *<br>* page 3, line 3 - page 4, line 9; figures 1a-b, 2 * | 1, 6,<br>14, 16 | |
| A | | 7 | |
| | --- | | |
| A | EP-A-0163466 (THERMA-WAVE INC.)<br>* abstract * | 1, 8, 14 | |
| | --- | | |
| | -/-- | | |

The present search report has been drawn up for all claims

| Place of search | Date of completion of the search | Examiner |
|---|---|---|
| BERLIN | 27 NOVEMBER 1990 | MOUTARD P. |

European Patent
Office

EUROPEAN SEARCH REPORT

Application Number

EP    90 11 3363
Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0223485 (INFRARED ENG. LTD.) <br> * abstract * <br> * column 1, lines 1 - 40 * <br> * column 5, line 30 - column 7, line 17; figures 1, 2 * | 1-9, 13-17 | |
| | | | TECHNICAL FIELDS SEARCHED (Int. Cl.5) |

The present search report has been drawn up for all claims

| Place of search | Date of completion of the search | Examiner |
|---|---|---|
| BERLIN | 27 NOVEMBER 1990 | MOUTARD P. |